# EUROPÄISCHE PATENTSCHRIFT

(11) **EP 2 734 463 B1**
(45) Veröffentlichungstag und Bekanntmachung des Hinweises auf die Patenterteilung: **20.07.2016**
(21) Anmeldenummer: 12730550.6
(22) Anmeldetag: 28.06.2012
(51) Int. Cl.: B65G 47/84, B65C 9/04

(54) **MODUL ZUM AUSRICHTEN VON BEHÄLTNISSEN UND VERFAHREN ZUM AUSRICHTEN VON BEHÄLTNISSEN**
MODULE FOR ALIGNING CONTAINERS AND METHOD FOR ALIGNING CONTAINERS
MODULE PERMETTANT D'ALIGNER DES RÉCIPIENTS ET PROCÉDÉ PERMETTANT D'ALIGNER DES RÉCIPIENTS

(30) Priorität: 20.07.2011 DE 102011108017
(43) Veröffentlichungstag der Anmeldung: 28.05.2014
(73) Patentinhaber: Krones AG, 93073 Neutraubling (DE)
(72) Erfinder: BLOCHMANN, Erik, 93073 Neutraubling (DE)
(74) Vertreter: Bittner, Bernhard
(86) Internationale Anmeldenummer: PCT/EP2012/062626
(87) Internationale Veröffentlichungsnummer: WO 2013/010771

(56) Entgegenhaltungen:
- EP-A1- 2 100 815
- EP-A1- 2 253 452
- WO-A1-2004/014779
- GB-A- 2 142 900

## Beschreibung

Die vorliegende Erfindung bezieht sich auf eine Vorrichtung und ein Verfahren zum Herstellen von Kunststoffbehältnissen. Derartige Vorrichtungen und Verfahren sind aus dem Stand der Technik seit langem bekannt. Dabei ist es unter anderem bekannt, dass bei derartigen Herstellungsverfahren Kunststoffbehältnisse hergestellt werden, indem erwärmte Kunststoffvorformlinge durch Druckbeaufschlagung zu den Kunststoffbehältnissen umgeformt werden. Anschließend werden diese Behältnisse mit Flüssigkeiten, insbesondere Getränken befüllt und schließlich verschlossen. Dabei sind dem Stand der Technik auch solche Behältnisse bekannt, welche keinen kreisförmigen Querschnitt aufweisen, sondern hiervon abweisende Querschnitte wie beispielsweise elliptische Querschnitte. Bei der Herstellung dieser Querschnitte werden spezielle Blasmaschinen vorgesehen, die entsprechend elliptisch ausgebildete Blasformen aufweisen. Bei der Etikettierung und Befüllung bereiten jedoch derartige Behältnisse, welche einen nicht kreisförmigen Querschnitt aufweise, gelegentlich Probleme, da die Füll- und Etikettiermäschinen eine exakte Ausrichtung dieser Behältnisse erfordern. Auch bei der Übergabe auf einen Förderer oder in einen Lufttransporteur kann eine Ausrichtung erforderlich sein um z.B. Verklemmungen im Transport zu vermeiden.

Die WO 2010/013207 A2 beschreibt eine Anlage zum Blasformen von Kunststoffbehältnissen und insbesondere Flaschen. Diese Anlage weist dabei eine Vielzahl von auswechselbaren Blasformen auf, die jeweils Hohlräume zum Formen der Behälter ausbilden.

Die DE 10 2009 033 809 A1 beschreibt eine Vorrichtung zum Behandeln von Behältnissen mit einer Trägersterilisation. Dabei werden Halteelemente zum Halten der Behältnisse selbst durch eine Reinigungseinrichtung sterilisiert.

Die DE 198 16239 A1 beschreibt eine Vorrichtung zum Einbringen und/oder Ausbringen von Behältern in bzw. aus einem Behandlungsraum. Dabei sind durch eine Steuereinrichtung betätigbare Greifer vorgesehen, welche die Behälter in den Schleusenkammern vorübergehend fixieren, vorzugsweise hängend ohne Boden-Abstützung.

Aus der DE 10 2006 023 531 A1 ist eine Vorrichtung zum Transportieren von Stückgut bekannt. Dabei ist ebenfalls eine Vielzahl von durch eine Steuereinrichtung betätigbaren Greifern vorgesehen, welche Behältnisse in Schleusenkammern vorübergehend fixieren.

In der nachveröffentlichten deutschen Patentanmeldung DE 10 2010 054 792 A1 wurde ebenfalls eine Vorrichtung zum Behandeln von Behältnissen mit Behältnisausrichtung beschrieben.

GB 2 142 900 A beschreibt eine Vorrichtung nach dem Oberbegriff des Anspruchs 1.

Der vorliegenden Erfindung liegt die Aufgabe zugrunde, die Herstellung von Behältnissen, insbesondere von Behältnissen mit nicht kreisförmigem Querschnitt, beispielsweise ovalen Behältnissen, zu vereinfachen. Dabei soll insbesondere auch das Verschließen und Etikettieren der Behältnisse erleichtert werden.

Diese Aufgaben werden erfindungsgemäß durch eine Vorrichtung und ein Verfahren nach den unabhängigen Ansprüchen erreicht. Vorteilhafte Ausführungsformen und Weiterbildungen sind Gegenstand der Unteransprüche.

Eine erfindungsgemäße Vorrichtung zum Behandeln von Behältnissen weist eine erste bewegliche Transporteinrichtung zum Transportieren der Behältnisse entlang eines vorgegebenen Transportpfades auf. Dabei ist an dieser Transporteinrichtung eine Vielzahl von klammerartigen Greifelementen angeordnet, wobei diese Greifelemente zwischen einem geschlossenen Zustand, in dem das Behältnis von dem Greifelement gegriffen wird und einem geöffneten Zustand, in dem ein Griff des Behältnisses (insbesondere ein Eingriff in einen Bereich, insbesondere einen Aussenwandungsbereich und insbesondere auch einen Mündungsbereich) durch das Greifelement zumindest gelockert ist, schaltbar sind.

Erfindungsgemäß weist die Transporteinrichtung zusätzlich zu den Greifelementen eine Vielzahl von Halteeinrichtungen auf, welche in Eingriff mit einem Mündungsabschnitt des Behältnisses bringbar sind oder welche das Behältnis an seinem Bodenabschnitt stützen, wobei wenigstens einem Behältnis während seines Transports mit der Vorrichtung zumindest zeitweise sowohl (genau) ein Greifelement als auch eine Halteeinrichtung - insbesondere zum Zweck des Transports des Behältnisses - zugeordnet ist.

Erfindungsgemäß wird daher vorgeschlagen, dass zum Transport des Behältnisses sowohl die Greifeinrichtung als auch die Halteeinrichtung vorgesehen ist, welche bei der Behandlung der Behältnisse zusammenwirken. Auf diese Weise kann eine günstige Flaschenorientierung, insbesondere eine Orientierung hinsichtlich der Drehstellung der Behältnisse erreicht werden. Durch die erfindungsgemäße Vorrichtung ist es möglich, auf bisher bekannte und bewährte Systeme zurückzugreifen, welche die Behältnisse anschließend in ein Behandlungsmodul übergeben. Bei derzeit zum Teil bekannten Ausrichtmodulen werden Behältnisse mittels einer Greifeinrichtung an einen Dorn übergeben, der in die Behältnisse eintaucht. Durch diese Vorgehensweise treten diverse Probleme auf. So sind teilweise die Übergaben nicht richtig eingestellt, das heißt der Dorn taucht nicht exakt in die Mündung der Behältnisse ein. Des Weiteren kann das Problem auftreten, dass die Führungsgarnituren die Behältnisse beim Eintauchen des Transportdorns verdrehen. Weiterhin kann das Problem auftreten, dass eine Hubkurve zu lange auf die Führungsgarnituren drückt und auf diese Weise das Behältnis verdreht.

Es werden hier zwei Möglichkeiten für eine Halteeinrichtung vorgeschlagen, nämlich einerseits ein Haltedorn, der in die Mündung der Behältnisse eingreift und andererseits eine Halteeinrichtung, welche das Behältnise an seinem Boden also insbesondere von unten her abstützt. Falls die Halteeinrichtung als ein derartiger Halteteller ausgeführt ist, wird dieser Halteeteller unterhalb der Greifelemente angeordnet sein. Der Halteteller ist in diesem Falle bevorzugt als drehbarer Halteteller ausgeführt.

Vorzugsweise ist in einem geöffneten Zustand der Greifeinrichtung ein Eingriff dieser Greifeinrichtung zumindest so weit gelockert, dass eine Relativdrehung des Behältnisses bzgl. dessen Längsachse gegenüber der Greifeinrichtung möglich ist. Die Greifeinrichtung kann jedoch auch soweit geöffnet sein, dass auch eine Bewegung des Kunststoffbehältnisses in seiner Längsrichtung gegenüber der Greifeinrichtung möglich ist. Vorteilhaft ist die Greifeinrichtung klammerartig ausgebildet und greift vorteilhaft zum Halten der Behältnisse diese in einem Bereich von deren Mündung und insbesondere unterhalb eines Wulstes, der am Aussenumfang dieser Mündung angeordnet ist, wie beispielsweise einem Tragring. Bei den Behältnissen handelt es sich vorteilhaft um Kunststoffbehältnisse und insbesondere Kunststoffflaschen. Die erfindungsgemäße Vorrichtung ist jedoch auch zum Transport von Kunststoffvorformlingen oder auch von Glasflaschen einsetzbar. Vorteilhaft werden von der erfindungsgemäßen Vorrichtung jedoch leere Behältnisse behandelt bzw. transportiert.

Weiterhin kann das Problem auftreten, dass die Hubkurve nicht hochschaltet, wenn die Übergabe nicht mehr synchron ist. Auch tritt das Problem auf, dass derartige Hubeinheiten klemmen und daher regelmäßig geschmiert werden müssen. Eine derartige Schmierung ist dabei über dem Produkt angeordnet.

Daneben ist auch das Weiterdrehen der Behältnisse nach einem Verlassen einer Dreheinrichtung unterschiedlich, sodass nicht immer die exakt gleiche Drehstellung erreicht wird. Daneben kann es auch zu einem Schwingen der Transporteinrichtung bzw. des Sterns kommen, da das Eintauchen und das Abziehen sehr schnell vonstatten gehen und hohe Kurvenkräfte auftreten können.

Daneben kommt es teilweise zu dem Zustand, dass die Behältnisse im Falle einer Direktübergabe in den Lufttransport kurz stehen bleiben. Daneben kann auch das Problem auftreten, dass die Behältnisse nicht schnell genug aus dem Lufttransport fallen, wenn die Führung öffnet. Zum Teil werden auch sehr steile Führungskurven verwendet, welche ein Eintauchen und Abziehen der Dorne, die in die Mündungen der Behältnisse eingreifen, bewirken. Diese steilen Kurven ergeben sich aus der Notwendigkeit einer raschen Übergabe von den Greifelementen. Durch diese relativ steilen Kurven werden jedoch hohe Leistungen der Maschine verhindert.

Weiterhin wäre es wünschenswert, bei bestimmten Behältnissen, beispielsweise bei runden Behältnissen, eine Geschwindigkeitssteigerung der Anlage dadurch zu erreichen, dass die Drehfunktion abgeschaltet wird. Der Gegenstand der vorliegenden Erfindung schafft hierbei Abhilfe. Es daher vorgeschlagen, dass das Behältnis zumindest zeitweise sowohl von dem Greifelement als auch von der Halteeinrichtung gehalten werden kann. Auf diese können viele Probleme, beispielsweise das schnelle Eintauchen und Abziehen, verringert werden.

Bei dem Behandeln der Behältnisse kann es sich dabei um Behandlungen handeln, welche aus einer Gruppe von Behandlungen ausgewählt sind, welche ein Etikettieren der Behältnisse, ein Spülen der Behältnisse, ein Sterilisieren der Behältnisse, ein Inspizieren der Behältnisse, ein Drehen der Behältnisse oder auch einen Transport der Behältnisse enthält. Insbesondere werden die Behältnisse durch die erfindungsgemäße Vorrichtung zumindest bezüglich ihrer Längsachse oder einer zu der Längsachse parallelen Richtung gedreht. Dieses Drehen erfolgt dabei insbesondere zum Zwecke der Ausrichtung der Behältnisse.

Bei einer vorteilhaften Ausführungsform ist die Halteeinrichtung über dem Greifelement angeordnet. Vorteilhaft ist auch die Anzahl der Halte- und Greifelemente gleich, wobei es denkbar ist, dass die Greifelemente synchron mit den Halteeinrichtungen bewegt werden. Dabei ist es ebenfalls möglich, dass die Halteeinrichtungen an einem beweglichen und insbesondere drehbaren Träger angeordnet sind. Bei dieser Ausführungsform ist damit jedem Greifelement genau eine Halteeinrichtung zugeordnet.

Weiterhin weist bevorzugt die Transporteinrichtung ein um eine zentrale Achse drehbares Transportrad auf. Es wäre jedoch auch der Transport über Ketten, Bänder oder dergleichen denkbar.

Weiterhin wäre es denkbar, dass mit der erfindungsgemäßen Vorrichtung noch zusätzliche Behandlungsschritte vorgenommen werden, wie beispielsweise eine Sterilisation der Behältnisse.

Weiterhin ist es auch denkbar, dass eine Orientiereinheit, welche die oben erwähnten Halteeinrichtungen aufweist, modular ausgebildet ist, sodass diese Ausrichteinheit auch bei bestehenden Anlagen bzw. Transportsternen nachgerüstet werden kann. Auf diese Weise kann ein aus dem Stand der Technik an sich bekannter Transportstern in einen Ausrichtstern umgewandelt werden.

Durch die erfindungsgemäße Vorrichtung werden einfache Übergaben in aus dem Orientierungsstern erreicht. Weiterhin wird ein gleichmäßiges Drehen der einzelnen Behältnisse ermöglicht. Insbesondere sind die so beschaffenen Module in der Lage, nicht orientierte Behältnisse ebenfalls zu behandeln.

Vorteilhaft greift damit das Greifelement die Behältnisse in einen Bereich, in dem diese bezüglich Rotationen symmetrisch ausgebildet sind. Die Halteeinrichtung hält die Behältnisse, wie oben erwähnt, ebenfalls in einem Mündungsbereich. Vorteilhaft handelt es sich bei der Halteeinrichtung um einen Dorn, der in das Innere der Mündung eingeführt wird und der auf diese Weise die Behältnisse von innen her hält.

Erfindungsgemäß sind die Halteeinrichtungen jeweils um eine vorgegebene Drehachse drehbar und zwar derart, dass an den Halteeinrichtungen angeordnete Behältnisse um deren Längsachse oder eine zu dieser Längsachse parallele Achse drehbar sind.

Bei einer weiteren vorteilhaften Ausführungsform weist die Vorrichtung eine Steuerungseinrichtung auf, welche bewirkt, dass die Behältnisse entlang ihres Transportpfades abschnittsweise nur von den Greifeinrichtungen und abschnittsweise nur von den Halteeinrichtungen gehalten werden. Dabei kann die Vorrichtung derart ausgestaltet sein, dass die Behältnisse Anfangs nur von den Greifeinrichtungen gehalten werden, beispielsweise nachdem die Behältnisse von einer weiteren Vorrichtung, wie einem Transportstern, an die erfindungsgemäße Vorrichtung übergeben wurden.

Dies bedeutet, dass die erfindungsgemäße Vorrichtung zumindest in ihrem Anfangsbereich genauso wirken kann, wie eine herkömmliche Transportvorrichtung. Anschließend werden vorteilhaft die Behältnisse von den Halteeinrichtungen gehalten, das heißt die oben erwähnten Dorne greifen bevorzugt in die Mündungen ein. Auf diese Weise ist es möglich, die Behältnisse um deren Längsrichtung zu drehen, wobei hierzu gleichzeitig vorteilhaft die Greifeinrichtungen gelockert oder gelöst sind. Nach der erfolgten Drehung können die Greifeinrichtungen wieder in die Behältnisse greifen und entsprechend können die Halteeinrichtungen entfernt, beispielsweise abgezogen, werden.

Erfindungsgemäß sind die Halteeinrichtungen in einer Längsrichtung der Behältnisse gegenüber den Behältnissen bewegbar. Auf diese Weise können die Halteeinrichtungen insbesondere in eine Mündung der Behältnisse eingeführt und auch wieder aus dieser ausgeführt werden. Dabei ist es möglich, dass die Behältnisse selbst anhoben und gesenkt werden. Vorteilhaft werden jedoch für diesen Vorgang die Halteeinrichtungen selbst abgesenkt und wieder angehoben. Weiterhin ist es denkbar, dass die Halteeinrichtungen oberhalb der Behältnisse bzw. oberhalb des Transportpfades der Behältnisse angeordnet sind und auf diese Weise von oben her in die Mündungen der Behältnisse eingreifen. Es wäre jedoch bei bestimmten Anlagen auch denkbar, dass die Behältnisse kopfüber transportiert werden und so die Halteeinrichtungen von unten her in die Behältnisse eingreifen.

Bei einer weiteren vorteilhaften Ausführungsform weist die Vorrichtung eine Antriebseinrichtung zum Drehen der Halteeinrichtung auf. Dabei kann beispielsweise ein Riemen vorgesehen sein, der die einzelnen Halteeinrichtungen um deren Achse dreht. Es wäre jedoch auch denkbar, dass jede Halteeinrichtung einen separaten Antrieb, beispielsweise in Form eines Servomotors aufweist. Auf diese Weise ist eine individuelle Drehung der einzelnen Behältnisse um deren Längsachse möglich.

Bei einer weiteren vorteilhaften Ausführungsform weist die Vorrichtung eine Erfassungseinrichtung auf, welche eine Drehstellung der einzelnen Behältnisse erfasst. Als Reaktion auf eine derartig erfaßte Drehstellung kann die Ausrichtung durch eine bestimmte Drehung des Behältnisses erfolgen.

Bei einer weiteren vorteilhaften Ausführungsform ist ein Halten der Behältnisse durch die Halteeinrichtungen während des Transports der Behältnisse aktivierbar und deaktivierbar. Diese Ausgestaltung eignet sich, damit mit der gleichen Vorrichtung auch solche Behälntisse einfach behandelt werden können, welche beispielsweise kreisrund ausgebildet sind und daher nicht hinsichtlich ihrer Drehstellung ausgerichtet werden müssen. Das Deaktivieren der Halteeinrichtung kann dabei derart erfolgen, dass einerseits kein Absenken der Halteeinrichtungen mehr in die Behältnisse erfolgt und diese andererseits während des vollständigen Transports die Behältnisse lediglich von den Greifeinrichtungen gehalten werden. In diesem Falle wirkt die erfindungsgemäße Vorrichtung als herkömmlicher Transportstern für die Behältnisse.

Die vorliegende Erfindung ist weiterhin auf eine Anlage zum Behandeln von Behältnissen mit einer Vorrichtung der oben beschriebenen Art gerichtet und einer in der Transportrichtung der Behältnisse nach der Vorrichtung angeordneten Behandlungseinrichtung, welche die Behältnisse in einer vorgegebenen Weise behandelt. Bei dieser weiteren Behandlungseinrichtung kann es sich beispielsweise um eine Etikettiereinrichtung oder eine Sterilisiereinrichtung handeln. Weiterhin wäre es auch möglich, dass zwischen der oben beschriebenen Vorrichtung und der weiteren Behandlungseinrichtung eine Transporteinrichtung wie ein Transportstern angeordnet ist. Es wäre jedoch auch möglich, dass die Behältnisse ausgehend von der erfindungsgemäßen Vorrichtung, beispielsweise auch über eine weitere Transporteinrichtung an einem Luftförderer übergeben werden.

Die vorliegende Erfindung ist weiterhin auf ein Verfahren zum Behandeln von Behältnissen gerichtet, wobei die Behältnisse mittels einer Transporteinrichtung entlang eines vorgegebenen Transportpfads transportiert werden und während dieses Transports zeitweise von Greifelementen in wenigstens einem Bereich ihres Außenumfangs gegriffen werden. Dabei werden die Greifelemente während des Transports der Behältnisse von einem geschlossenen Zustand in einen geöffneten Zustand überführt, um den Eingriff der Greifeinrichtungen in die Behältnisse zumindest zu lockern. Insbesondere soll durch die Überführung im geöffneten Zustand eine Relativdrehung der Behältnisse gegenüber den Greifeinrichtungen ermöglicht werden. Bei einem bevorzugten Verfahren werden die Behältnisse in einem ungefüllten Zustand von der Transporteinrichtung transportiert.

Erfindungsgemäß werden die Behältnisse während ihres Transports teilweise von Halteeinrichtungen an ihrem Mündungsbereich gegriffen und/oder an ihrem Boden bzw. Bodenbereich abgestützt, wobei jedes Behältnis während seines Transports zeitweise von einem Greifelement und zeitweise von einer Halteeinrichtung gehalten und transportiert wird.

Falls die Halteeinrichtung den Boden der Behältnisse abstützt, kann es ausreichend sein, wenn die Halteeinrichtungen den Boden zumindest partiell bzw. an einigen Punkten abstützen. Auch wäre es denkbar, dass die Halteeinrichtungen die Behältnisse an einem Übergangsbereich abstützen, in dem der Boden des Behältnisses in einen Grundkörper des Behältnisses übergeht. Zusätzlich können derartige Teller die Behältnisse jedoch auch noch an deren Umfangswandung kontaktieren, um die Behältnisse gegenüber den Halteeinrichtungen zu stabilisieren. Daneben könnten derartige die Behältnisse von unten her haltende Halteeinrichtungen auch Aufnahmeschalen zum Aufnehmen eines Bodenbereichs der Behältnisse aufweisen.

Es wird daher auch verfahrensseitig insbesondere vorgeschlagen, dass durch ein kombiniertes Halten der Behältnisse sowohl mit den Greifelementen als auch mit den Halteeinrichtungen eine Ausrichtung derselben vorgenommen werden kann, insbesondere durch Drehung der Behältnisse bezüglich ihrer Längsachse. Vorteilhaft kontaktieren die Halteeinrichtungen und die Greifeinrichtungen die Behältnisse an unterschiedlichen Bereichen der Behältnisse und besonders bevorzugt kontaktieren die Halteeinrichtungen die Behältnisse an deren Innenwandung (einschließlich einer Innenwandung des Mündungsbereichs der Behältnisse).

Bei einem weiteren vorteilhaften Verfahren werden die Behältnisse während ihres Transports entlang des Transportpfades um ihre Längsachse gedreht. Es wäre jedoch, wie oben erwähnt, auch möglich, dass die Drehung um eine zu der Längsachse parallele Achse erfolgt.

Bei einem weiteren vorteilhaften Verfahren werden die Behältnisse entlang des Transportpfades zunächst von den Greifelementen, anschließend von den Halteeinrichtungen und schließlich wieder von den Greifelementen gehalten und transportiert.

Bei einer weiteren vorteilhaften Ausführungsform werden die Halteeinrichtungen wenigstens zeitweise gegenüber den Behältnissen in der Längsrichtung der Behältnisse bewegt. Diese Bewegung erfolgt dabei insbesondere, um die Halteeinrichtungen in die Mündungen der Behältnisse einzuführen und um die Halteeinrichtungen später wieder aus den Behältnissen abzuziehen.

Weitere vorteilhafte Ausführungsformen ergeben sich aus den beigefügen Zeichnungen:

Darin zeigen:
- Fig. 1: eine schematische Darstellung eines Verfahrensablaufs nach dem Stand der Technik;
- Fig. 2: eine schematische Darstellung eines erfindungsgemäßen Verfahrensablaufes;
- Fig. 3a-d:: vier Darstellungen eines erfindungsgemäßen Verfahrensablaufs;
- Fig. 4: eine Darstellung eines erfindungsgemäßen Anlagenkonzepts.
- Fig. 5: eine weitere Darstellung eines erfindungsgemäßen Verfahrensablaufs;
- Fig. 6: eine Darstellung einer erfindungsgemäßen Vorrichtung;
- Fig. 7: eine weitere Detaildarstellung der in Figur 6 gezeigten Vorrichtung;
- Fig. 8: eine weitere Darstellung der erfindungsgemäßen Vorrichtung;
- Fig. 9: eine weitere Detaildarstellung der Vorrichtung; und
- Fig. 10: eine Darstellung einer Hubeinheit einer erfindungsgemäßen Vorrichtung.

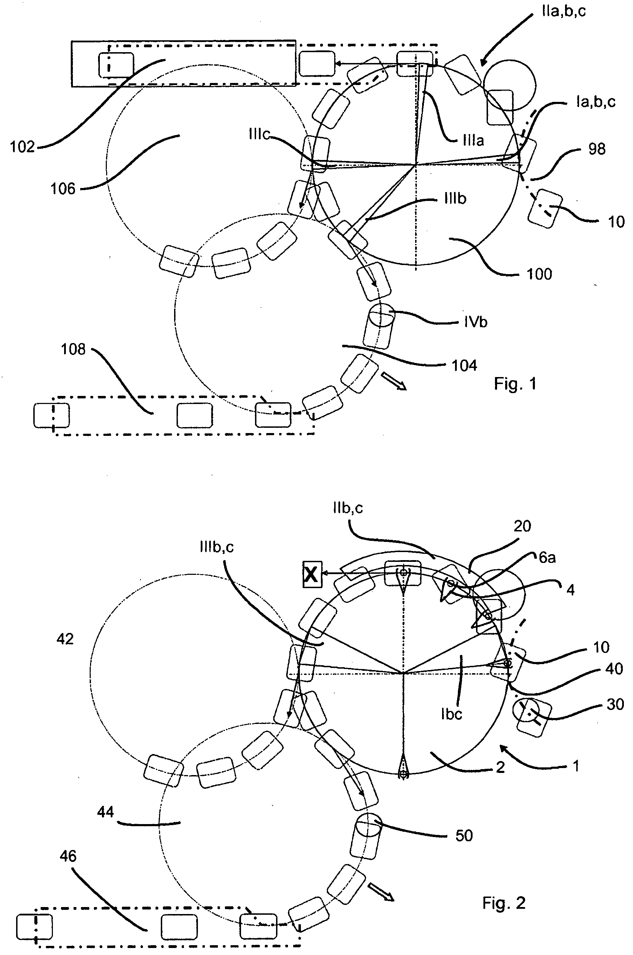

Figur 1 zeigt schematisch einen Verfahrensablauf nach dem Stand der Technik. Dabei werden die Behältnisse 10, welche einen hier rechteckigen Querschnitt aufweisen von einer Transporteinrichtung wie einem Transportstern 98 an eine Transporteinheit 100 übergeben. Ausgehend von dieser Transporteinheit 100 gelangen die Behältnisse entweder an einen Lufttransport 102 (Variante a), an ein Transportrad 104 und einen sich daran anschließenden Lufttransport 108 (Variante b) oder an ein Transportrad 106 (Variante c). Bei allen Varianten wird in den Verfahrensschritt I a, I b, I c ein Dorn in die Mündungen der Behältnisse eingeführt. Man erkennt, dass hier der Winkel dieses Einführens relativ klein ist und damit das Einführen des Dorns sehr schnell erfolgen muss.

Ebenfalls bei dem für alle Varianten gleichen Verfahrensschritt werde die Behältnisse bezüglich ihrer Längsachse gedreht. Bei der Variante a wird der Dorn in dem Prozessabschnitt IIIa abgezogen, bei der Variante b in den Verfahrensschritt IIIb und bei der Variante c in den Verfahrensschritt IIIc. Im Falle der Variante b wird anschließend noch die Mündung der Behältnisse in dem Schritt IV b betrachtet. Durch diese Ausgestaltung kommt es zu den oben erwähnten Schwierigkeiten wie beispielsweise ein nicht exaktes Eintauchen des Dorns in die Mündung bei dem Verfahrensschritt I.

Wie oben erwähnt, ist eine der Erfindung zugrunde liegende Aufgabe, die Leistung der Maschinen beispielsweise auf bis zu 63000 Behälter pro Stunde zu erhöhen.

Fig. 2 zeigt eine Darstellung einer erfindungsgemäßen Vorgehensweise. Auf die in Figur 1 gezeigte Variante a mit dem Lufttransport direkt im Anschluss an die Transporteinrichtung d.h. die erfindungsgemäße Vorrichtung 1 wurde hier verzichtet. Das Bezugszeichen 2 bezieht sich hier auf die Transporteinrichtung in ihrer Gesamtheit, bei der es sich beispielsweise um ein Transportrad handeln kann. In diesem Transportrad ist eine Vielzahl von Greifelementen 4 vorgesehen, die zunächst die Behältnisse 10 greifen und von der Transporteinrichtung 40 übernehmen. Anschließend tauchen in dem Prozesswinkel Ib,c Haltedorne 6a in die Mündungen der Behältnisse 10 ein.

Man erkennt, dass hier der Prozesswinkel in dem Vefahrensschritt I wesentlich größer ist als im Stand der Technik, d.h. es werden bei Weitem nicht so steile Führungskurven verwendet wie bei der in Figur 1 gezeigten Variante nach dem Stand der Technik. Sobald die Haltedorne 6a in die Mündungen der Behältnisse eingegriffen haben, öffnet sich die Greifklammer 4 und nunmehr werden die Behältnisse direkt von den Dornen gehalten.

Mit Hilfe einer Antriebseinrichtung 20 werden die einzelnen Haltedorne mit den daran angeordneten Behältnissen 10 gedreht und damit eine Drehung der Behältnisse um deren Längsachse bewirkt. Dies stellt den ebenfalls für alle Behältnisse einheitlichen Verfahrensschritt IIb,c dar.

In dem Verfahrensschritt IIIb,c wird der Haltedorn wieder abgezogen, wobei auch hier der Prozesswinkel wesentlich größer ist als im Stand der Technik. Gleichzeitig greifen die Greifelemente wieder und halten wiederum anstelle der Haltedorne die Behältnisse. Anschließend werden bei den Varianten b und c die Behältnisse wieder an Transporteinrichtungen 42 bzw. 44, bei denen es sich beispielsweise um Transportsterne handeln kann, übergeben. An die Transporteinrichtung 44 schließt sich wieder ein Lufttransport 46 an. Das Bezugszeichen 50 bezieht sich auf eine optional vorhandene Inspektionseinrichtung, welche die Mündungen der Behältnisse inspiziert. Das Bezugszeichen 30 bezieht sich auf eine weitere Inspektionseinrichtung, welche einen Drehwinkel der Behältnisse inspiziert, für den Fall, dass die Behältnisse 10 individuell gedreht werden.

Bei dieser Ausgestaltung erfolgt die Übergabe der Behältnisse aus dem Transport in den Orientierungsstern bzw. die Transportvorrichtung 1 über einen herkömmlichen Transportstern. Dabei kann die Vorrichtung so ausgebildet sein, dass über einem gewöhnlichen Neckhandling-Stern eine Orientierungseinheit mit den drehbaren Halteeinrichtungen modular aufgesetzt ist. Das Ausrichten der Behältnisse erfolgt weiterhin über einen Transportdorn, der in die Mündung der Behältnisse eingreift.

Die Übergabe von dem unteren Neckhandling-Stern erfolgt durch Eintauchen dieses Haltedornes 6a in die Mündung und anschließend wird, wie oben erwähnt, das Greifelement 4 geöffnet. Bei der in Figur 2 gezeigten Ausführungsform erfolgt das Verdrehen der Behältnisse weiterhin über einen Riemen mit einem Asynchronmotor. Bei einigen Varianten ist es möglich, diesen Asynchronmotor durch einen Servomotor zu tauschen. Ein Vorteil dieser Ausführungsform besteht darin, dass der Riemen für alle Betriebsbedingungen synchron zu der Transporteinrichtung laufen kann.

Bei einem weiteren Verfahren wäre es auch möglich, dass jeder einzelne Haltedorn bzw. jede einzelne Halteeinrichtung 6 über Servoschrittmotoren separat gedreht werden. Wie oben erwähnt, kann bei einer weiteren Ausführungsform eine Kamera den Drehwinkel für jedes einzelne Behältnis erfassen bzw. vorgeben.

Beim Abziehen werden, wie oben erwähnt, zunächst die Greifelemente 4 wieder geschlossen und anschließend die Halteeinrichtung 6 abgezogen. Die Übergabe in den nachfolgenden Transportstern kann dann wieder über aus dem Stand der Technik bekanntes Neckhandling erfolgen. Vorteilhaft werden also die Behältnisse zumindest zeitweise sowohl von einem Greifelement 4 als auch von einer Halteeinrichtung 6 gehalten. Die Greifeinrichtungen 4 sind bevorzugt in der Längsrichtung der Behältnisse stets unterhalb der Halteeinrichtungen angeordnet. Falls die Halteeinrichtung einen Bodenbereich der Behältnisse abstützt also etwa als Drehteller unterhalb der Flasche ausgeführt ist, ist die Halteeinrichtung oberhalb der Greifeinrichtung. In diesem Zusammenhang wird darauf hingewiesen, dass anstelle von Halteeinrichtungen, welche in eine Mündung der Behältnisse eingreifen auch Halteeinrichtungen denkbar wären, welche die Behältnisse von unten her stützen.

Weiterhin ist es möglich, als Bypass für runde Behältnisse das Eintauchen und Abziehen der Halteeinrichtungen abzuschalten. Weiterhin wäre es auch möglich, das Orientierungssystem nachträglich anzuwenden, falls der Kunde bzw. der Benutzer anfangs nur runde Behältnisse fährt. Weiterhin können auf diese Weise einige der aus dem Stand der Technik bekannten Führungsgarnituren eingespart werden.

Zu den Verbesserungen gegenüber dem bisherigen System können genannt werden, dass nun genauere Übergaben ohne ein Verdrehen der Behältnisse möglich sind und auch ein einfaches Einstellen aller Übergaben durchführbar ist. Damit werden auch hohe Leistungen auch mit Formbehältern, d.h. Behältnissen, welche von kreisförmigen Querschnitten abweichende Querschnitte haben, ermöglicht.

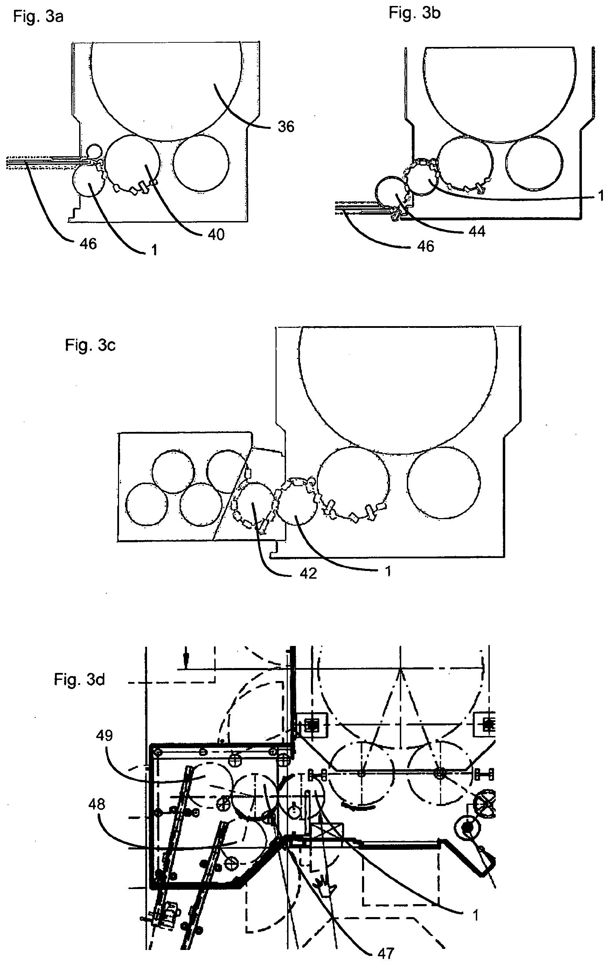

Die Figuren 3a-3d zeigen vier Ausgestaltungen einer erfindungsgemäßen Vorrichtung. Bei der in Figur 3a gezeigten Variante schließt sich an eine Behandlungseinheit 36, wie etwa eine Füllmaschine oder eine Blasmaschine, ein Transportrad 40 an, und an diesen wiederum die erfindungsgemäße Vorrichtung 1. An diese erfindungsgemäße Vorrichtung 1 schließt sich hier unmittelbar ein Lufttransport 46 an, d.h. die Übergabe der Behältnisse erfolgt aus der Orientierung direkt in einen Luft- oder Bandtransport.

Bei der in Figur 3b gezeigten Ausführungsform schließt sich an die Vorrichtung 1 zunächst ein weiterer Transportstern 44 an, und erst dann ein Luft- bzw. Bandtransport 46. Optional ist hier, wie oben erwähnt, noch eine Beobachtung der Mündung der Behältnisse denkbar.

Bei der in Figur 3c gezeigten Variante schließt sich an die Vorrichtung 1 ein weiterer Transportstern 42 an. Hier erfolgt die Übergabe der Behältnisse direkt in den Transportstern, beispielsweise zu einer Füllerschnittstelle.

Figur 3d zeigt schematisch weitere Möglichkeiten für Sonderausläufe, wobei sich hier an die erfindungsgemäße Vorrichtung 1 unterschiedliche Transportsterne 47, 48 und 49 anschließen können.

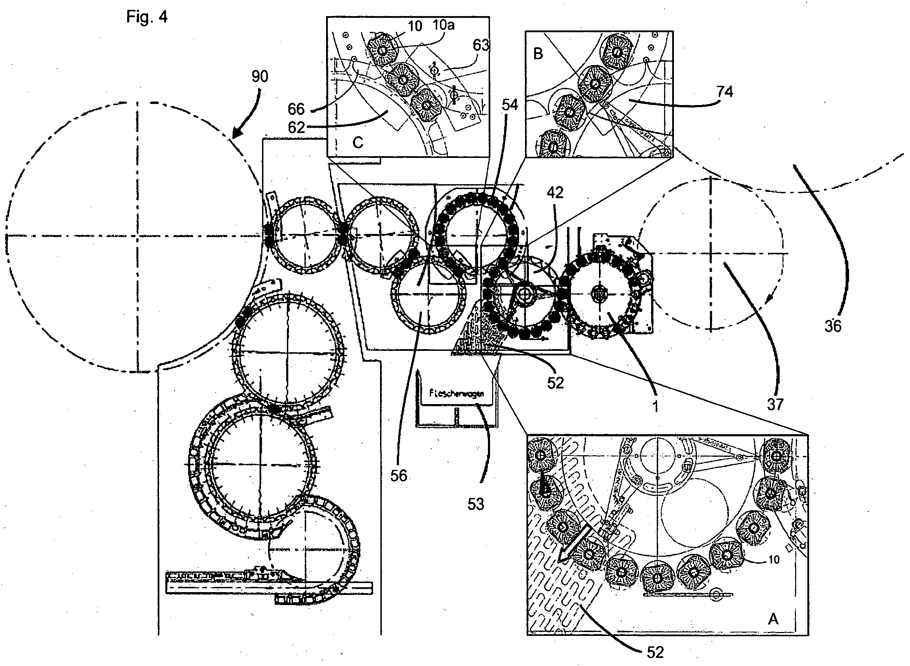

Figur 4 zeigt eine Gesamtdarstellung einer möglichen erfindungsgemäßen Vorrichtung mit vergrößerten Teildarstellungen A, B und C. Dabei ist wiederum eine Blasmaschine 36 vorgesehen, welche über einen Auslaufstern 37 die Behältnisse an die Vorrichtung 1 übergibt. An die Vorrichtung 1 schließt sich wiederum eine Transporteinrichtung 42 an, im Bereich derer die Behältnisse beispielsweise über ein Transportband 52 in einen Flaschenwagen 53 ausgeleitet werden können, wie dies genauer in der vergrößerten Darstellung A gezeigt ist. Daneben wäre jedoch auch eine Weiterleitung an ein Transportrad 54 möglich, was ebenfalls durch die Vergrößerung B dargestellt ist. In diesem Bereich wäre es denkbar, dass Führungssegmente 74 eine weitere Drehung der Behältnisse um deren Längsachse bewirken.

Weiterhin wäre es auch möglich, dass die Behältnisse an ein Transportelement bzw. eine Transporteinrichtung 56 übergeben werden und in diesem Bereich von 2 Führungssegmenten 62 und 63 in Aufnahmetaschen 66 eingeschoben werden, sodass sie auch hier genau hinsichtlich ihrer Drehstellung orientiert sind. Das Bezugszeichen 10a kennzeichnet eine Mündung der Behältnisse. Das Bezugszeichen 90 bezieht sich auf eine weitere Behandlungseinrichtung wie etwa eine Fülleinrichtung für die Behältnisse.

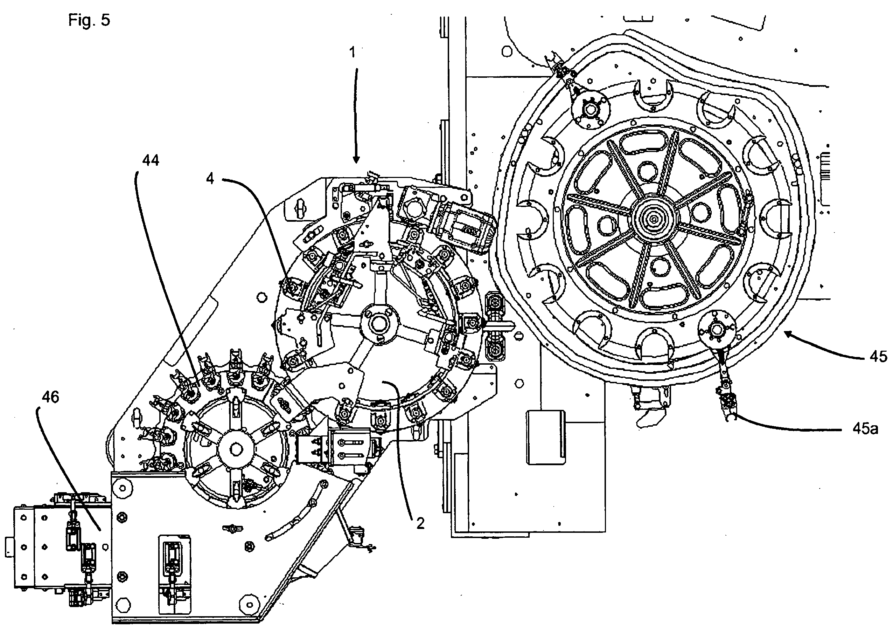

Figur 5 zeigt eine weitere Darstellung einer erfindungsgemäßen Anlage. Auch hier ist ein Transportstern 45 vorgesehen, an der eine Vielzahl von Greifelementen 45a vorgesehen, die jedoch hier zusätzlich um Schwenkachsen schwenkbar sind, so dass die Transporteinrichtung 45 als Teilungsverzugsstern ausgebildet ist, der eine Teilung zwischen den einzelnen Behältnissen ändern kann. An diese Transporteinrichtung 45 schließt sich wiederum die erfindungsgemäße Vorrichtung 1 an, die zur Orientierung der Drehstellung der Kunststoffbehältnisse dient. Damit werden hier aus dem Teilungsverzugsstern 45 die Behältnisse auf einen Dorn in die Vorrichtung 1 übergeben und dort um einen definierten Winkel gedreht und anschließend in die weitere Transporteinrichtung 44 sowie den Lufttransport 46 übergeben.

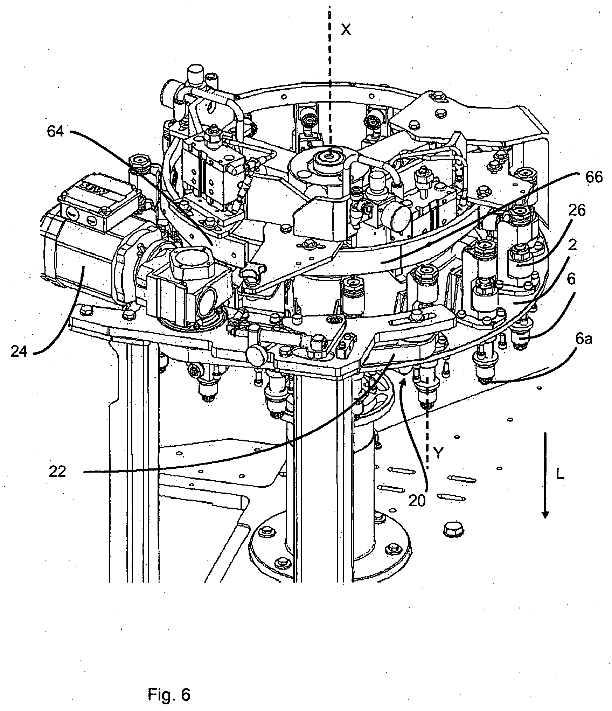

Figur 6 zeigt eine Darstellung einer erfindungsgemäßen Vorrichtung 1. Man erkennt hier wiederum die Transporteinrichtung 2, die hier als drehbarer kreisförmiger Träger ausgebildet ist, an dem eine Vielzahl von Halteeinrichtungen 6 angeordnet ist. Diese Halteeinrichtungen 6 sind dabei über eine Hubkurve 64 in ihrer Längsrichtung, d.h. der Richtung L, die gleichzeitig auch eine Längsrichtung des Behältnisses ist, bewegbar.

Das Bezugszeichen 66 kennzeichnet eine weitere Hubkurve, die für das Rückstellen der Halteeinrichtungen 6 bzw. der Haltedorne 6a aus den Behältnismündungen zuständig ist. Daneben werden die Behältnisse von Greifelementen 4, die hier nicht dargestellt sind, an ihren Mündungen bzw. unterhalb des Tragrings gegriffen. Auch die Greifelemente 4 sind dabei drehbeweglich bzw. an der Transporteinrichtung 2 angeordnet. Die Transporteinrichtung dreht sich hier um eine zentrale Drehachse X. Das Bezugszeichen 20 kennzeichnet in seiner Gesamtheit eine Antriebseinrichtung, welche die Halteeinrichtungen 6 um ihre jeweiligen Achsen y dreht, um auf diese Weise auch die Behältnisse 10 zu drehen. Diese Antriebseinrichtung weist hier einen umlaufenden Riemen 22 auf, der von einer Antriebseinheit wie einem Motor 24 angetrieben wird, um auf diese Weise eine einheitliche Drehung der einzelnen Halteeinrichtungen 6 bzw. der Haltedornen 6a zu bewirken. Dieser Riemen kann zu diesem Zweck einen Kontaktbereich 26 der Halteeinrichtungen 6 kontaktieren und diesen Kontaktbereich 26 und damit auch den diesen Kontaktbereich 26 zugeordneten Haltedorn 6a drehen. Der Kontaktbereich 26 ist damit drehbar gegenüber der Transporteinrichtung 2.

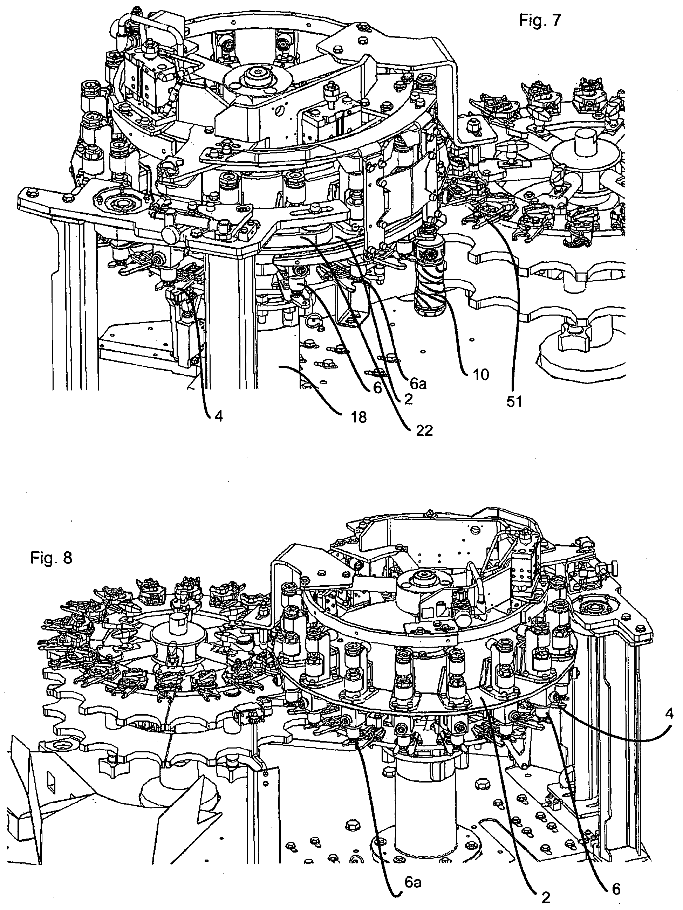

Figur 7 zeigt eine weitere Darstellung der erfindungsgemäßen Vorrichtung. Das Bezugszeichen 18 kennzeichnet einen zentralen Antrieb zum Antreiben der Transporteinrichtung 2. Das Bezugszeichen 51 bezieht sich auf weitere Greifklammern, welche zum Übergeben bzw. Übernehmen der Behältnisse an die bzw. von der Vorrichtung 1 dienen. Diese Greifklammern sind dabei vorzugsweise in der Längsrichtung der Behältnisse 10 höhenversetzt gegenüber den Greifelementen 4.

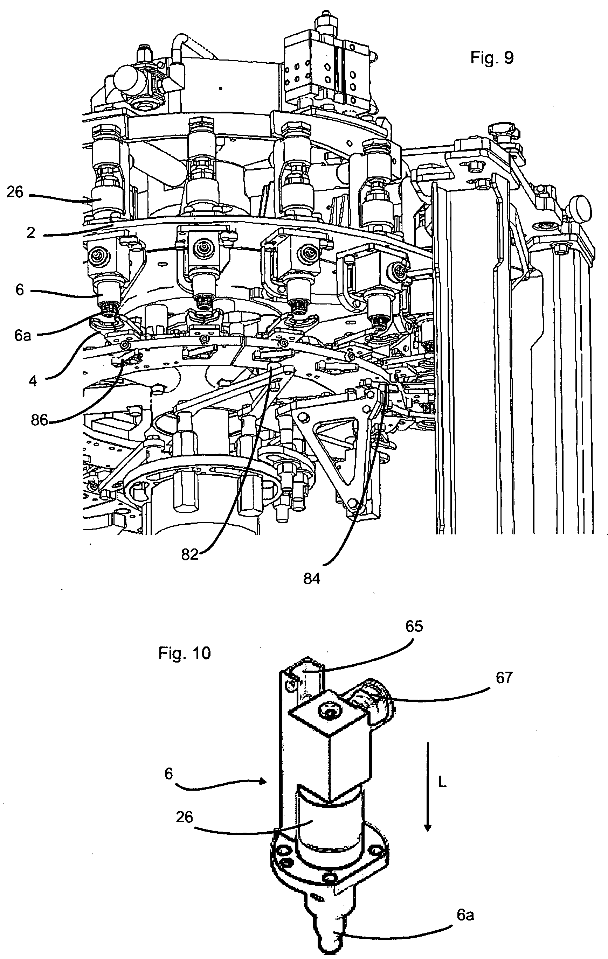

Die Figuren 8 und 9 zeigen weitere Darstellungen einer erfindungsgemäßen Vorrichtung 1. Man erkennt hier wiederum die Transporteinrichtung 2, an der eine Vielzahl von steuerbaren Greifelementen 4 (nur eines schematisch gezeigt) angeordnet ist. Diese Greifelemente 4 werden bei dieser Variante jeweils mit Stellsegmenten 82, 84 (vgl. Fig. 9) geöffnet oder geschlossen. Diese Stellsegmente 82, 84 bewirken dabei eine Schwenkung von schwenkbaren Stellkörpern 86, welche mit den Greifelementen derart gekoppelt sind, dass eine Schwenkung dieser Stellkörper 86 zu einem Öffnen oder Schließen der Greifklammer 4 führt. Genau genommen bewirken diese Stellsegmente 82, 84, dass die Greifelemente 4 von einem geöffneten in einen geschlossenen Zustand und umgekehrt überführbar sind. Es wäre jedoch auch denkbar, dass die einzelnen Greifelemente jeweils eigene Antriebe aufweisen, um zwischen einer Öffnungsbewegung und einer Schließbewegung zu schalten. Hierbei kommen z.B. magnetische Antriebe, hydraulische Antriebe, pneumatische Antriebe und dergleichen in Betracht.

Figur 10 zeigt eine Darstellung einer Halteinrichtung 6. Dabei ist wiederum der Bereich 6a gezeigt, der in das Behältnis eintauchen kann, sowie eine Führung 65, gegenüber der der Haltedorn 6a in der Richtung L bewegbar ist. Das Bezugszeichen 67 kennzeichnet eine Kurvenrolle, die gegenüber der in Figur 7 gezeigten Führungskurve 64 abrollt und auf diese Weise die Längsbewegung des Haltedorns 6a bewirkt. Die Führungsschiene 65 ist dabei, wie oben erwähnt, fest an der Transporteinrichtung 2 angeordnet.

Auch sind hier wieder die Halteeinrichtungen 6 vorgesehen, die in eine Mündung des Dorns eingreifen. Es ist möglich, dass weniger oder mehr Halteeinrichtungen als Greifelemente vorgesehen sind, in der Regel werden jedoch die Anzahlen der Greifelemente und der Halteeinrichtungen 6 gleich sein.

### Bezugszeichenliste

- 1: Transportvorrichtung/erfindungsgemäße Vorrichtung
- 2: Transporteinrichtung
- 4: Greifelemente/Greifklammer
- 6: Halteeinrichtung
- 6a: Haltedorne
- 10: Behältnisse
- 20: Antriebseinrichtung
- 22: umlaufender Riemen
- 24: Motor
- 26: Kontaktbereich der Halteeinrichtung
- 30: weitere Inspektionseinrichtung
- 36: Behandlungseinheit, Blasmaschine
- 37: Auslaufstern
- 40,42,44: Transporteinrichtung/Transportrad
- 45: Transportstern/Teilungsverzugsstern/Transporteinrichtung
- 45a: Greifelemente
- 46: Lufttransport
- 47,48,49: Transportsterne
- 50: Inspektionseinrichtung
- 51: weitere Greifklammer
- 52: Transportband
- 53: Flaschenwagen
- 56: Transporteinrichtung
- 62, 63: Führungssegment
- 64: Hubkurve
- 65: Führungsschiene
- 66: Aufnahmetasche
- 67: Kurvenrolle
- 74: Führungssegment
- 82, 84: Stellsegment
- 86: Stellkörper
- 90: Fülleinrichtung
- 98: Transportstern (Stand der Technik)
- 100: Transporteinheit (Stand der Technik)
- 102: Lufttransport (Variante a) (Stand der Technik)
- 104: Transportrad (Stand der Technik)
- 108: Lufttransport (Variante b) (Stand der Technik)
- 106: Transportrad (Variante c) (Stand der Technik)

- X, Y: Achse
- I-IV: Verfahrensschritte

## Patentansprüche

1. Vorrichtung zum Behandeln von Behältnissen (10) mit einer ernsten beweglichen Transporteinrichtung (2) zum Transportieren der Behältnisse (10) entlang eines vorgegebenen Transportpfades, an der eine Vielzahl von klammerartigen Greifelementen (4) angeordnet ist, wobei diese Greifelemente (4) zwischen einem geschlossenen Zustand, in dem das Behältnis (10) von dem Greifelement (4) gegriffen wird und einem geöffneten Zustand, in dem ein Griff des Behältnisses (10) durch das Greifelement (4) zumindest gelockert ist, schattbar sind, wobei
die Transporteinrichtung (2) zusätzlich zu den Greifelementen (4) eine Vielzahl von Halteeinrichtungen (6) aufweist, welche in Eingriff mit einem Mündungsabschnitt des Behältnisses bringbar sind oder welche das Behältnis an seinem Bodenabschnitt stützen, wobei wenigstens einem Behältnis (10) während seines Transports mit der Vorrichtung (1) zumindest zeitweise sowohl ein Greifelement (4) als auch eine Halteeinrichtung (6) zu dessen Transport zugeordnet ist, wobei die Halteeinrichtungen (6) jeweils um eine vorgegebene Drehachse drehbar sind, derart, dass an den Halteeinrichtungen (6) angeordnete Behättnisse (10) um deren Längsachse oder eine zu dieser Längsachse parallele Achse drehbar sind, **dadurch gekennzeichnet, dass** die Halteeinrichtungen (6) in einer Längsrichtung (L) der Behältnisse (10) gegenüber den Behältnissen (10) bewegbar sind.

2. Vorrichtung (1) nach Anspruch 1
**dadurch gekennzeichnet, dass**
die Vorrichtung eine Steuerungseinrichtung aufweist, welche bewirkt, dass die Behältnisse (10) entlang ihres Transportpfades abschnittsweise nur von den Greifeinrichtungen (4) und abschnittsweise nur von den Halteeinrichtungen (6) gehalten werden.

3. Vorrichtung nach Anspruch 1,
**dadurch gekennzeichnet, dass**
die Vorrichtung eine Antriebseinrichtung (20) zum Drehen der Halteeinrichtungen (6) aufweist

4. Vorrichtung nach wenigstens einem der vorangegangenen Ansprüchen,
**dadurch gekennzeichnet**, das
ein Halten der Behältnisse (10) durch die Halteeinrichtungen (6) während des Transports der Behältnisse (10) aktivierbar und deaktivierbar ist.

5. Anlage zum Behandeln von Behältnissen (10) mit einer Vorrichtung nach wenigstens einem der vorangegangenen Ansprüche und einer in einer Transportrichtung der Behältnisse nach der Vorrichtung (1) angeordneten Behandlungseinrichtung, welche die Behältnisse in einer vorgegebenen Weise behandelt.

6. Verfahren zum Behandeln von Behältnissen (10), wobei die Behältnisse (10) mittels einer Transporteinrichtung (2) entlang eines vorgegebenen Transportpfades transportiert Werden und während dieses Transports zeitweise von Greifelementen (4) an Weinigstens einem Bereich ihres Aussenumfanges gegriffen werden, wobei die Greifelemente während des Transports der Behältnisse (10) von einem geschlossenen Zustand in einen geöffneten Zustand überführt werden, um den Eingriff der Greifeinrichtungen (4) in die Behältnisse (10) zumindest zu lockern, wobei
die Behältnisse während ihresTransports teilweise von Halteeinrichtungen (6) an ihrem Mündungsbereich gegriffen oder an ihrem Boden abgestützt werden wobei jedes Behältnis (10) während seines Transports zeitweise von einem Greifelement (4) und zeitweise von einer Halteeihrichtung (6) gehalten und transportiert wird, wobei die Behältnisse während ihres Transports entlang des Transportpfades um ihre Längsachse gedreht werden, **dadurch gekennzeichnet, dass** die Halteihrichtungen (6) wenigstens zeitweise gegenüber den Behältnissen in der Längsrichtung (L) der Behältnisse bewegt werden.

7. Verfahren nach Anspruch 6,
**dadurch gekennzeichnet, dass**
die Behältnisse (10) entlang ihres Transportpfades zunächst von den Greifelementen (4) anschließend von den Halteeinrichtungen (6) und schließlich wieder von den Greifelementen (4) gehalten und transportiert werden.

## Claims

1. An apparatus for the treatment of containers (10) with a first movable transport device (2) for transporting containers (10) along a pre-set transport path on which transport device are arranged a plurality of clamp-like gripping elements (4), wherein these gripping elements (4) are capable of being switched between a closed state, in which the container (10) is gripped by the gripping element (4), and an opened state, in which a grip of the container (10) is at least loosened by the gripping element (4), wherein the transport device (2) has, in addition to the gripping elements (4), a plurality of holding devices (6) which are capable of being brought into engagement with an aperture portion of the container or which support the container on the base portion thereof, wherein both one gripping element (4) and one holding device (6) are associated with at least one container (10) during the transport thereof by the apparatus (1) at least for a time for the transport thereof, wherein the holding devices (6) are rotatable in each case about a pre-set axis of rotation, in such a way that containers (10) arranged on the holding devices (6) are rotatable about their longitudinal axis or an axis parallel to this longitudinal axis, **characterized in that** the holding devices (6) can be moved in a longitudinal direction (L) of the containers (10) relative to the containers (10).

2. An apparatus (1) according to claim 1, **characterized in that** the apparatus has a control device which has the effect that the containers (10) are held in sections only by the gripping devices (4) and in sections only by the holding devices (6) along their transport path.

3. An apparatus according to claim 1, **characterized in that** the apparatus has a drive device (20) for the rotation of the holding devices (6).

4. An apparatus according to at least one of the preceding claims, **characterized in that** a holding of the containers (10) by the holding devices (6) is capable of being activated and de-activated during the transport of the containers (10).

5. A plant for the treatment of containers (10) with an apparatus according to at least one of the preceding claims and a treatment device which is arranged downstream of the apparatus (1) in a transport direction of the containers and which treats the containers in a pre-set manner.

6. A method of treating containers (10), wherein the containers (10) are transported along a pre-set transport path by means of a transport device (2) and are gripped for a time in at least one region of the external periphery thereof by gripping elements (4) during this transport, wherein the gripping elements are transferred from a closed state into an opened state during the transport of the containers (10) in order at least to loosen the engagement of the gripping devices (4) in the containers (10), wherein the containers are gripped at the aperture region thereof or are supported at the base thereof in part by holding devices during their transport, wherein each container (10) is held and transported for a time by a gripping element (4) and for a time by a holding device (6) during its transport, wherein the containers are rotated about the longitudinal axis thereof during the transport thereof along the transport path, **characterized in that** the holding devices (6) are moved at least for a time with respect to the containers in the longitudinal direction (L) of the containers.

7. A method according to claim 6, **characterized in that** the containers (10) are held and transported along the transport path thereof first by the gripping elements (4), then by the holding devices (6) and finally again by the gripping elements (4).

## Revendications

1. Dispositif pour le traitement de récipients (10), comportant une première installation de transport (2) mobile pour le transport des récipients (10) le long d'un chemin de transport prédéfini sur lequel est disposé une pluralité d'éléments de saisie (4) en forme de pinces, dans lequel lesdits éléments de saisie (4) étant commutables entre un état de fermeture où le récipient (10) est saisi par l'élément de saisie (4) et un état d'ouverture où la prise du récipient (10) par l'élément de saisie (4) est au moins desserrée, dans lequel le dispositif de transport (2) comporte une pluralité de dispositifs de maintien (6) en plus des éléments de saisie (4), lesquels pouvant être en prise avec une partie d'embouchure du récipient ou soutiennent le récipient par sa partie inférieure, dans lequel à la fois un élément de saisie (4) et un dispositif de maintien (6) étant associé à au moins un récipient (10) pendant le transport de celui-ci par le dispositif au moins pendant un certains temps pour son transport, dans lequel les dispositifs de maintien (6) peuvent à chaque fois tourner autour d'un axe prédéfini de rotation, de telle manière que des récipients (10) disposés sur les dispositifs de maintien (6) peuvent tourner autour de leur axe longitudinal ou d'un axe parallèle à cet axe longitudinal, **caractérisé en ce que** les dispositifs de maintien (6) sont déplaçables par rapport aux récipients (10) dans une direction longitudinale des récipients (10).

2. Dispositif (1) selon la revendication 1,
**caractérisé en ce que**
ledit système comporte une installation de commande provoquant que les récipients (10) soient maintenus en sections par les seuls dispositifs de saisie (4) et en sections par les seuls dispositifs de maintien (6) le long de leur chemin de transport.

3. Dispositif selon la revendication 1,
**caractérisé en ce que**
ledit dispositif comporte une installation d'entraînement (20) pour la rotation des dispositifs de maintien (6).

4. Dispositif selon au moins une des revendications précédentes,
**caractérisé en ce qu'**
un maintien des récipients (10) par les dispositifs de maintien (6) peut être activé et désactivé pendant le transport des récipients (10).

5. Unité pour le traitement de récipients (10), avec un dispositif selon au moins une des revendications précédentes et une installation de traitement qui traite les récipients de manière prescrite, situé en aval du système (1) dans la direction de transport des récipients.

6. Procédé de traitement de récipients (10), dans lequel les récipients (10) étant convoyés par un dispositif de transport (2) le long d'un chemin de transport prédéfini et étant saisis temporairement par des éléments de saisie (4) sur au moins une partie de leur périphérie extérieure pendant ce transport, dans lequel les éléments de préhension étant passés d'un état de fermeture à un état d'ouverture pendant le transport des récipients (10) pour au moins desserrer la prise des dispositifs de saisie (4) sur les récipients (10), dans lequel les récipients étant en partie saisis sur leur partie d'embouchure ou soutenus par leur fond par les dispositifs de maintien (6) pendant leur transport, dans lequel chaque récipient (10) est temporairement maintenu et convoyé par un élément de saisie (4) et par un dispositif de maintien (6) pendant son transport, dans lequel les récipients sont entraînés en rotation autour de leur axe longitudinal pendant leur transport le long du chemin de transport, **caractérisé en ce que** les dispositifs de maintien (6) sont au moins temporairement déplacés par rapport aux récipients, dans une direction longitudinale (L) des récipients.

7. Procédé selon la revendication 6,
**caractérisé en ce que**
les récipients (10) sont maintenus et transportés par les éléments de saisie (4) d'abord, puis par les dispositifs de maintien (6) et pour terminer de nouveau par les éléments de saisie (4) le long de leur chemin de transport.
